# EUROPEAN PATENT SPECIFICATION

(11) **EP 1 359 489 B1**
(45) Date of publication and mention of the grant of the patent: **07.02.2007**
(21) Application number: 03075958.3
(22) Date of filing: 02.04.2003
(51) Int. Cl.: F16K 31/60, G05D 23/02, F24D 19/10

(54) **Device for selecting the operating mode of control heads in particular for thermostatic valves**
Vorrichtung zur Auswahl der Betriebsart von Regelköpfen, insbesondere für Thermostatventile
Dispositif de selection du mode de fonctionnement de têtes de réglage en particulier pour des robinets thermostatiques

(30) Priority: 24.04.2002 IT MI20020896
(43) Date of publication of application: 05.11.2003
(73) Proprietor: Fracchia, Stefano, Boffalora S. Ticino (MI) (IT)
(72) Inventor: Fracchia, Stefano, Boffalora S. Ticino (MI) (IT)
(74) Representative: Raimondi, Margherita

(56) References cited:
- EP-A- 0 694 722
- EP-A- 0 903 525
- DE-A- 4 140 374
- DE-C- 19 929 983

## Description

The present invention relates to a device for selecting the operating mode of control heads in particular for thermostatic valves.

In the technical sector relating to heating, so-called thermostatic valves are known, said valves being mounted on the pipes supplying the fluid which circulates inside radiators or similar heating devices arranged in rooms, in order to regulate the flowrate of the fluid and therefore the temperature of the environment.

In greater detail, thermostatic valves consist of an actual valve and a control head comprising a knob which has, arranged inside it, an element displaceable coaxially with respect to the element for opening/closing the said valve so as to cause greater/lesser opening with consequent greater/lesser circulation of hot fluid inside the radiator.

Said movable element is in turn operated by actuator devices which are sensitive to the temperature in the environment and arranged inside the valve regulating knob and which, reacting to the higher/lower surrounding temperature, cause thrusting/retraction of the said movable element and therefore the corresponding closing/opening movement of the valve.

It is also known in the most recent embodiments said valves are required to perform three different functions:
- regulation of the temperature by means of manual rotation of the regulating knob by the user;
- setting, by the user, of a predefined maximum end-of-scale value up to which it is possible to regulate the temperature, again by rotating the regulating knob;
- fixing of the regulating knob at a value of the scale prechosen by the user in order to prevent variations in the temperature.

It is also known that thermostatic control heads have been developed for this purpose, said heads being essentially formed by three parts: a fixed element to be constrained to the supply valve; a regulating knob with the graduated scale; a ring arranged between the two and able to locked on the control knob during normal operation of the valve as well as be displaced axially and rotate with respect to the said knob so as to allow relative unlocking of the ring and knob and the desired operational settings (reduced flowrate/fixed setting) before subsequent renewed locking of the ring on the said knob.

The three parts are equipped with various special elements for relative interference/locking in order to allow the three types of operation described above.

An example of the known art mentioned above is described in EP 0,903,525.

Although fulfilling their function, these heads have the defect, however, that the user is obliged to use, when selecting the settings, always the same graduated scale present on the knob, which results in complicated operations which are not particular obvious for the user.

In addition to this, in the known embodiments it is required to use a tool in order to disengage the ring from the knob, which poses a further difficulty for the end user.

The technical problem which is posed, therefore, is that of providing a device for selecting the operating mode of a control head in particular for thermostatic valves which allows easy and obvious use by the end user who is normally a person without expertise.

Within the scope of this problem, a further requirement is that the valve head may be easily adapted during assembly to the different types of temperature-sensitive elements (wax/liquid) which are normally used and contained inside the regulating knob.

These technical problems are solved according to the present invention by a device for selecting the operating mode of control heads, according to the characteristics of claim 1.

Further details may be obtained from the following description of a non-limiting example of embodiment of the invention, provided with reference to the accompanying plates of drawings in which:
- Figure 1 shows an exploded view of the control head of the thermostatic valve with the selection device according to the present invention;
- Figure 2 is a perspective view of the control head
- Figure 3 is a cross-section along the plane indicated by III-III in Fig. 2;
- Figure 4 is a front view of the ring for selecting the operating mode of the knob;
- Figure 5 a cross-section along the plane indicated by V-V in Fig. 6;
- Figure 6 is a cross-section along the plane indicated by VI-VI in Fig. 5;
- Figure 7 is a cross-section along the plane indicated by VII-VII in Fig. 5;
- Figs. 8a, 8b are respectively a cross-section similar to that of Fig. 3 and a view of the control head in the condition for normal use;
- Figure 9 is a cross-section along the plane indicated by IX-IX in Fig. 8a with the valve totally closed;
- Figure 10 is a cross-section along the plane indicated by IX-IX in Fig. 8a with the control head totally open;
- Figures 11a,11b are respectively a cross-section similar to that of Fig. 3 and a view of the valve during disengagement of the ring in order to limit the rotation of the knob;
- Figure 12 is a cross-sectional view, along the plane indicated by XII-XII in Fig. 11a, of the valve with the knob rotated in the open position as far as the new end-of-scale setting;
- Figure 13 is a cross-section, similar to that of Fig. 3, with the valve in the condition where the knob is fixed at a prechosen value;
- Figure 14 is a front view of the element supporting the temperature sensor;
- Figure 15 is a cross-section along the plane indicated by XV-XV in Fig. 14;
- Figure 16 is a cross-section along the plane indicated by XVI-XVI in Fig. 14;
- Figure 17 is a top plan view of a first embodiment of the element for locking the temperature sensor holder of the head;
- Figure 18 is a cross-section along the plane indicated by XVIII-XVIII in Fig. 17;
- Figure 19 is a top plan view of a second embodiment of the temperature sensor holder of the head;
- Figure 20 is a cross-section along the plane indicated by XX-XX in Fig. 19; and
- Figure 21 is a cross-section along the axial plane of the control head with a temperature sensor of the liquid type.

Solely for the purposes of simplification of the description, but without being limiting, the relative positions of the various parts of the valve will be defined as "top and bottom" in relation to the arrangement thereof in the figures, but it is obvious that, in the event of rotation of the valve, these definitions of the positions could change in absolute terms, without however any alteration in relative terms and as regards the functional meanings.

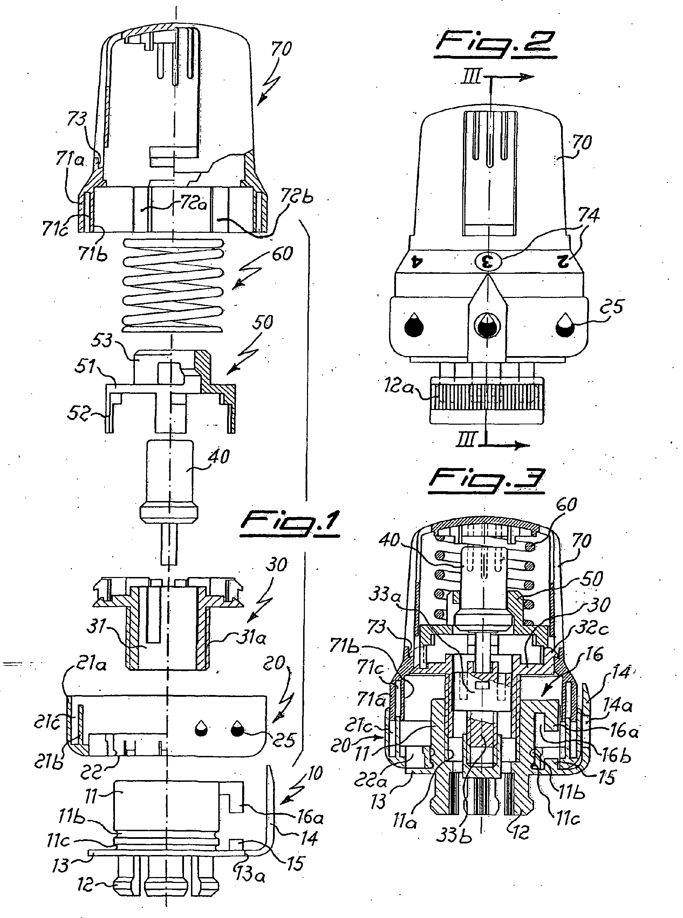

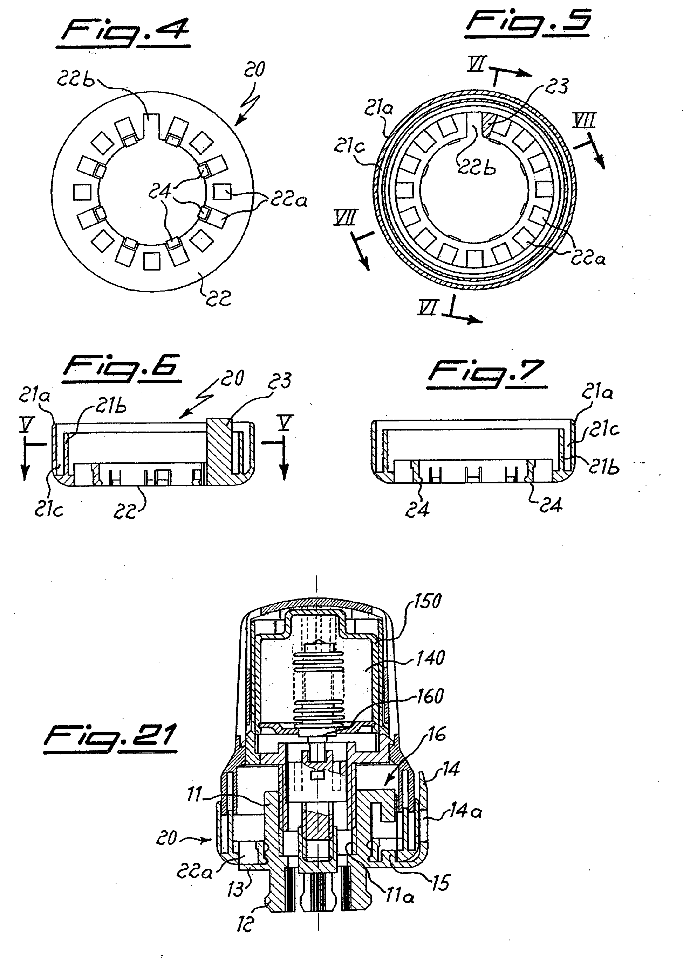

As illustrated in Figs. 1, 2 and 3, the control head of a thermostatic valve according to the present invention essentially consists of:
- a central body 10;
- a ring 20 for selecting the operating mode of the valve;
- an element 30 supporting the sensor 40 which is sensitive to the surrounding temperature;
- a sensor 40 for detecting the surrounding temperature;
- an element 50 for locking the sensitive element 40 in position;
- a spring-type safety element 60;
- a knob 70 which can be rotationally operated by the user in order to select the temperature.

In greater detail, the central body 10 is formed by: a cylinder 11 which is open at the top and internally hollow; on its internal surface the cylinder has a female thread 11a, while the outer side surface is provided with two coaxial annular seats 11b,11c which are arranged on the opposite side to that where the top threaded opening is situated.

The bottom part of the cylinder consists of elastic means 12 able to support a ring nut 12a for constraining the control head of the valve (not shown) to the valve of the heating device, for example a radiator (not shown).

The body 10 also envisages a circular flange 13 which is arranged underneath the said circular seats 11b,11c; in a predefined angular position said flange has an extension 13a in the radial direction which is folded upwards so as to form a fixed reference pointer 14 which is advantageously in the form of an arrow extending parallel to the longitudinal axis of the valve. Said arrow has an opening 14a. Between the external surface of the body 11 and the reference pointer 14 the said flange has a tooth 15 which extends upwards in the longitudinal direction.

In an angular position corresponding to said tooth 15 the cylindrical body 11 has a projection 16 in the form of an overturned "L" which therefore forms a second longitudinal tooth 16a arranged opposite the first tooth 15, as well as a hollow seat 16b which lies between the tooth 16a itself and the cylindrical body 11.

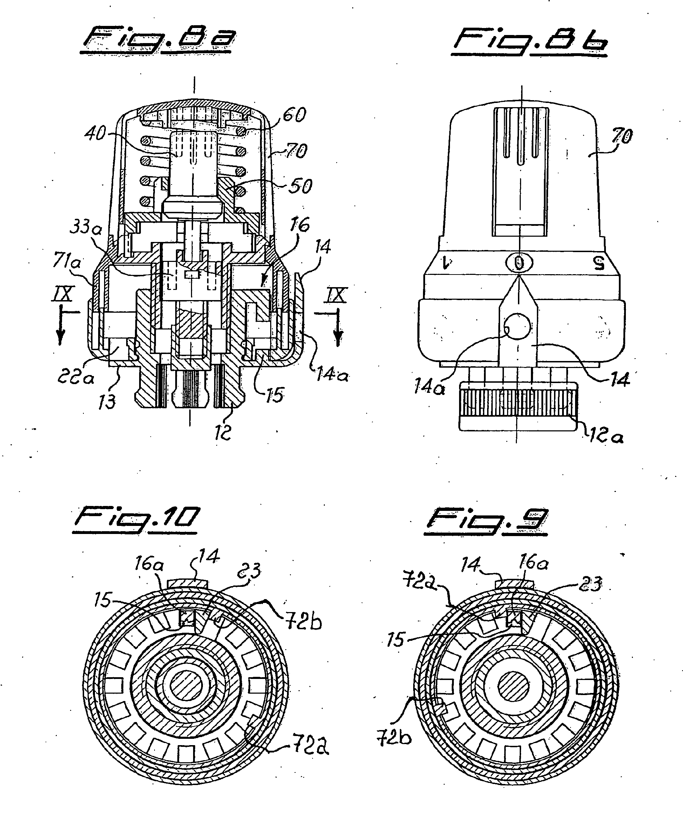

The selection ring 20 (Figs. 4-6) comprises two annular surfaces which are concentric with each other, i.e. an outer surface 21a and inner surface 21b, which define an annular seat 21c inside them.

The bottom front surface 22 of the ring 20 has a plurality of seats 22a which are arranged at a uniform angular distance along the circumference, as well as an axial opening 22b able to allow the tooth 16 to pass through and therefore the insertion, in the axial direction, of the ring 20 onto the body 10.

In addition to the said seats 22a the ring has elastic means 24 suitable for fastening the ring in one or other of the said annular seats 11b, 11c of the body 10. In a position adjacent to the said opening 22b the ring 20 has an internal radial tooth 23 extending over the entire axial height of the ring (Fig. 6).

On its external surface the ring 20 has a graduated scale, which in the example is formed by discontinuous symbols 25, but which can also be realised by means of a continuous illustration 25 which is conventional per se and not shown.

As illustrated in Figs. 16-17 the element 30 supporting the sensor holder 50 consists of a cylindrical body 31 which has a thread 31a suitable for mating with the female thread 11a of the body 10 for mutual constraining in the axial direction.

At the opposite end to the threaded end, the support element 30 has a circular flat-piece 32 provided with seats 32a with an undercut 32b, which are arranged at regular angular intervals, as well as toothed radial lugs 32c, in the example arranged in pairs, suitable for engagement with the knob 70; between the lugs 32c of each pair there is also arranged a further radial lug 32d able to form an end-of-travel stop for the downwards movement of the knob 70 in the axial direction.

The support element also envisages two further coaxial parts 33a,33b for connection to the tap of the valve of for the heating device; these parts, which are conventional per se, are illustrated, but not described in detail.

The particular form of the support element 30 allows engagement thereof with two different sensor holders 50,150 for the temperature-sensitive sensor 40,140.

In particular:
- the element 50 shown in Figs. 17-18 consists of a ring 51 from which there extend four arms 52 and on the opposite side to the arms 52 a coaxial, hollow, annular relief 53 able to receive a sensor 40 of the wax type illustrated in Figs. 1-3 and centre the spring 60 which is situated outside the said locking element. In addition to the axial cavity, the relief 53 also has openings 53a for allowing the air to pass towards the sensor;
- the element 150 shown in Figs. 19-20 consists of a ring 151 from which there extend four arms 152 elastically deformable in the radial direction and provided at their free ends with an inwardly directed prong 152a for engagement with one of the undercuts 32b of the support element 30.

This element is able to be used with a sensor 140 of the liquid type illustrated in Fig. 21 with an elastic compensating device arranged inside the sensor 140; it is envisaged moreover that the external diameter of the ring 151 corresponds to the internal diameter of the knob 70 in order to prevent opening of the arms 152 during regulation of the valve.

The bottom part of the actuating knob 70 consists of two annular edges, i.e. an outer edge 71a and an inner edge 71b, between which there is a seat 71c suitable for engagement in an axial direction with the corresponding edges 21a,21b of the ring 20.

On its external surface the knob has a graduated scale consisting, for example, of numbers 74 corresponding to the different operating temperatures and suitable for defining an operating range with a "Min." setting (valve closed) and a "Max." setting (valve completely open).

Inside it the knob 70 has projections 72a and 72b extending in an axial direction, as well as seats 73 suitable for engagement with the said teeth 32c of the sensor support element 30.

With reference to the various parts described above, assembly of the valve is performed as follows:
- starting with the body 10 and once an angular position thereof has been fixed;
- the opening 22b of the ring 20 is brought into an angular position corresponding to the tooth 16 and the ring 20 is mounted axially onto the body 10 so as to bring the ring to bear against the flange 13 so that the first tooth 15 of the latter is inserted into the said opening 22b, locking the ring rotationally, while the teeth 24 of the ring engage radially with the bottom annular seat 11c so that the said ring 20 is also locked axially to the cylindrical body;
- the thread 31a of the sensor holder body 30 is screwed onto the female thread 11a of the body 11;
- the sensor 40 is inserted (in the example) and the locking element 50 is applied by inserting the arms 52 into the corresponding seats 32a;
- the spring 60 is placed on the ring 51;
- the knob 70 is set to the relative angular position such as to arrange the two projections 72a, 72b both on the same side with respect to the tooth 23 of the ring 20, corresponding to an open valve condition, and the knob 70 is inserted coaxially until it is secured to the teeth 32c of the radial arms 32 of the flat-piece 30, locking it axially.

The operating principle of the valve is as follows:

### A) Normal operation:

- The valve assembled in accordance with the sequence described above has the form as shown in Figs. 8a-8b and the knob 70 can be rotationally operated from a totally closed condition (Fig. 9) with the projection 71a bearing against a flank of the tooth 16a of the body 10 and the tooth 23a of the ring 20 against the other flank of the said tooth 16a, into a totally open condition (Fig. 10) with the knob rotated in an anticlockwise direction until the projection 71b bears against the opposite side of the tooth 23;

### B) Operation with reduced flowrate

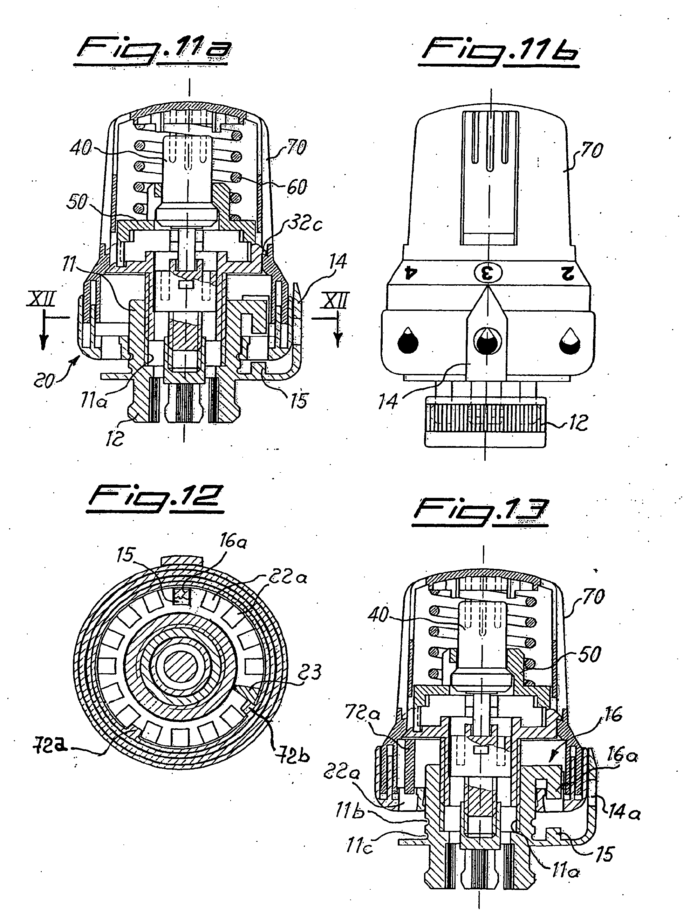

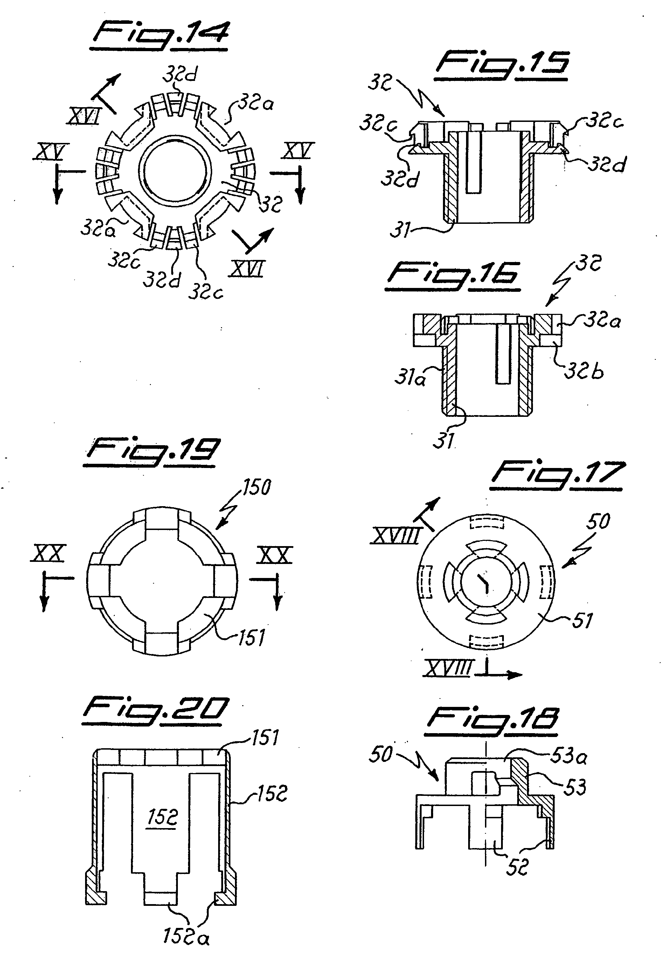

- If it is required to limit the regulation of the valve opening to a maximum value less than the "Max." value envisaged by the graduated scale of the knob (Figs. 11a,11b), the following procedure is adopted:
- the ring 20 is displaced axially towards the knob so as to bring it into the locked position in the annular seat 11b closest to the said knob 70, thus freeing the said ring from rotational locking by the tooth 15 of the flange 13;
- the ring 20 is rotated until the symbol 25 of the scale corresponding to the prechosen "Max." temperature is situated opposite the reference pointer 14 of the flange 13 (Fig. 11a), the said prechosen value being visible through the opening 14a;
- with this rotation the internal radial tooth 23 of the ring 20 is brought substantially into a new angular position which defines the new end-of-travel position for rotation of the knob;
- the ring 20 is displaced axially in the opposite direction to the previous direction so as to bring it into the normal working condition with a seat 22a in axial engagement with the tooth 15 which prevents rotation of the ring 20;
- with this arrangement the knob 70 may perform only a partial rotation from the totally closed position (Fig. 9) into the new end-of-scale position set (Fig. 12), limiting substantially the maximum recirculating flowrate of the fluid inside the heating device and therefore the surrounding temperature.

### C) Fixing the valve to a prechosen flowrate value

If it is required to fix the valve to a prechosen value on the operating scale, the following procedure is adopted:
- the ring 20 is displaced axially towards the knob until it is locked in the annular seat 11b closest to the knob 70, thus freeing the said ring from rotational locking by the tooth 15 of the flange 13;
- the ring 20 is rotated so as to bring the symbol 25 on the scale of the ring 20 corresponding to the prechosen working temperature opposite the reference pointer 14 of the flange (Fig. 11a);
- a further displacement of the ring 20 is performed in the same direction as above (Fig. 13) towards the knob so as to bring the corresponding seat 22a into engagement with the part 16a of the tooth 16 of the body 10 and a second seat 22a into engagement with the projection 72a/72b inside the knob;
- in this way both the ring 20 and the knob 70 are rotationally locked and variation of the prechosen flowrate value is prevented.

It can therefore be understood from the description provided above how operation of the control head of the valve is very simple and obvious for the end user since, owing to the absence of stable relative engagement in the axial direction between the knob and the regulating ring during normal operation of the valve, it is possible to operate solely the regulating ring and only in relation to its graduated scale; on the basis of said scale, it is possible to perform all the adjustments envisaged without the need for complementary operations of the knob.

In addition to this, it can be seen how the axial displacements of the regulating ring are possible without the need for manual tools.

## Claims

1. Device for selecting the operating mode of control heads, in particular for thermostatic valves, comprising:
- a body (10) provided with means (12,12a) for fastening to the valve and with a first tooth (16) projecting radially in the form of an overturned "L" and extending in the axial direction over a predetermined length, said body comprising a fixed flange (13), a part of which extends radially outwards and has a reference pointer (14) extending axially in the opposite direction to that of fastening to the heating device, on said flange there being present a tooth (15) extending axially in the opposite direction to that of constraining to the heating device, said body (10) also having means (11a) for engagement with:
- a support element (30) which can be associated in the axial direction with
- a sensor holder element (50 ; 150) for a temperature-sensitive sensor (40;140);
- elastic, coaxial, safety means (60; 160) interposed between said holder element (50 ; 150) and a rotating knob (70);
- the rotating knob (70) being for selection of the desired temperature by the user,
said knob having in its bottom part two internal projections (72a,72b), which are suitably angularly spaced relative to each other, and an external graduated scale (74) ;
- a ring (20) mounted axially onto the body (10) and movable both in the axial direction and rotationally for selection of the operating mode of the valve,
**characterized in that**:
- said second tooth (15) of the flange (13) is arranged in an angular position such as to be axially aligned with the first tooth (16) of the body (10) and arranged opposite the said first tooth;
- a graduated scale (25) is present on the external surface of the ring (20);
- said ring (20) has an internal projection (23) extending over the whole axial length of the said ring (20),
as well as a front surface (22) provided with seats (22a) able to engage alternately with the said second tooth (15) of the flange (13) or with the first tooth (16) of the body (10) and with at least one of the said internal projections (72a,72b) of the knob (70);
- said body (10) has coaxial annular grooves (11b, 11c) that cooperate with elastic means (24) of said ring (20) for engagement in the radial direction for constraining the ring (20) so as to lock it in different axial position of the body (10) to determine the different operations of the device.

2. Device according to Claim 1, **characterized in that** the element (30) supporting the sensor holder (50;150) consists of a cylindrical body (31) which has a thread (31a) suitable for mating with the female thread (11a) of the body (10) for relative constraining in the axial direction and a circular flat-piece (32) provided with seats (32a) arranged at suitable angular intervals for engagement with said sensor holder (50;150).

3. Device according to Claim 2, **characterized in that** said seats (32a) have an undercut (32b).

4. Device according to Claim 2, **characterized in that** said flat-piece (32) has toothed radial lugs (32c) suitable for engagement with the knob (70).

5. Device according to Claim 2, **characterized in that** said flat-piece (32) has additional radial lugs (32d) able to form an end-of-travel stop for the movement in an axial direction towards the valve of the knob (70).

6. Device according to Claim 2, **characterized in that** said holder element (50) for the sensor (40) consists of a ring (51) from which there extend four arms (52) and, on the opposite side to the arms (52), a coaxial, hollow, annular relief (53).

7. Device according to Claim 6, **characterized in that** the annular relief (53) has openings (53a) for allowing the air to pass towards the sensor.

8. Device according to Claim 2, **characterized in that** said holder element (150) for the sensor (140) consists of a ring (151) from which there extend four axial arms (152) which are elastically deformable in the radial direction and provided at their free ends with an inwardly directed prong (152a) for engagement with one of the undercuts (32b) of the support element (30).

9. Device according to Claim 8, **characterized in that** said holder element (150) for the sensor (140) has an external diameter corresponding to the internal diameter of the knob (70).

10. Device according to Claim 1, **characterized in that** said knob has annular seats (73) for engagement with the said teeth (32c) of the sensor support element (30).

11. Thermostatic valve comprising a control head **characterized by** the fact it is provided with a device for selecting the operating mode according to claim 1.

## Patentansprüche

1. Vorrichtung für die Auswahl der Betriebsweise von Steuerköpfen, insbesondere für thermostatische Ventile, enthaltend:
- einen Körper (10), der mit Mitteln (12, 12a) zum Befestigen des Ventils versehen ist und mit einem ersten Zahn (16), der radial in Form eines umgedrehten "L" vorspringt und sich in axialer Richtung über eine vorgegebene Länge erstreckt, wobei dieser Körper einen befestigten Flansch (13) aufweist, von dem sich ein Teil radial nach außen erstreckt und einen Referenz-Zeiger (14) besitzt, der sich axial in die entgegengesetzte Richtung zum Befestigen mit der Heizeinrichtung erstreckt, wobei auf diesem Flansch ein Zahn (15) vorgesehen ist, der sich axial in die entgegengesetzte Richtung zum Aufliegen an der Heizeinrichtung erstreckt, wobei dieser Körper (10) auch Mittel (11a) zum Eingriff aufweist mit
- einem Stützelement (30), das in der axialen Richtung zugeordnet sein kann
- einem Sensor-Halteelement (50; 150) für einen temperaturempfindlichen Sensor (40; 140);
- elastischen, koaxialen Sicherheitsmitteln (60; 160), die zwischen dem Halteelement (50; 150) und einem Drehknopf (70) angeordnet sind;
- wobei der Drehknopf (70) zur Auswahl der gewünschten Temperatur durch den Benutzer dient,
wobei dieser Knopf in seinem Bodenbereich zwei innere Vorsprünge (72a, 72b) aufweist, die winkelmäßig ausreichend voneinander entfernt sind, sowie eine äußere abgestufte Skala (74)
- einem Ring (20), der axial am Körper (10) angebracht ist und der sowohl in der axialen Richtung als auch drehend bewegbar ist, um die Betriebsweise des Ventils auszuwählen,
**dadurch gekennzeichnet, dass**
- der zweite Zahn (15) des Flanschs (13) in einer solchen Winkelposition angeordnet ist, dass er axial gegenüber dem ersten Zahn (16) des Körpers ausgerichtet ist und diesem ersten Zahn gegenüber liegt;
- sich eine abgestufte Skala (25) auf der äußeren Oberfläche des Rings (20) befindet;
- wobei dieser Ring einen inneren Vorsprung (23) aufweist, der sich über die gesamte axiale Länge dieses Rings (20) erstreckt,
sowie eine vordere Oberfläche (22), die mit Ausnehmungen (22a) versehen ist, in die abwechselnd der zweite Zahn (15) des Flanschs (13) oder der erste Zahn (16) des Körpers (10) und wenigstens einer der inneren Vorsprünge (72a, 72b) des Knopfs (70) eingreifen;
- wobei dieser Körper (10) ringförmige Nuten (11b, 11c) aufweist, die mit elastischen Mitteln (24) des Rings (20) zum Eingriff in radialer Richtung zusammenwirken, um den Ring (20) zusammenzupressen, damit er ihn in verschiedenen axialen Positionen des Körpers (10) verriegelt, um die verschiedenen Betriebsweisen der Vorrichtung zu bestimmen.

2. Vorrichtung nach Anspruch 1, **dadurch gekennzeichnet, dass** das Element (30), welches den Sensorträger (50; 150) trägt, aus einem zylindrischen Körper (31) besteht, der ein Gewinde (31a) hat, das in ein aufnehmendes Gewinde (11a) des Körpers (10) in axialer Richtung eingreifen kann, um relativ in axialer Richtung zusammenzubewegen, und dass ein rundes Flachstück (32), das mit Aufnahmen (32a) versehen ist, die in geeigneten Winkelabständen angeordnet sind, um in den Sensorhalter (50; 150) einzugreifen.

3. Vorrichtung nach Anspruch 2, **dadurch gekennzeichnet, dass** Aufnahmen (32a) einen Unterschnitt (32b) aufweisen.

4. Vorrichtung nach Anspruch 2, **dadurch gekennzeichnet, dass** das Flachstück (32) gezahnte radiale Nasen (32c) aufweist, die in den Knopf (70) eingreifen können.

5. Vorrichtung nach Anspruch 2, **dadurch gekennzeichnet, dass** das Flachstück (32) zusätzliche radiale Nasen (32d) aufweist, die einen Ende-der-Bewegung-Stopp für die Bewegung in axialer Richtung auf das Ventil des Knopfs (70) zu bilden können.

6. Vorrichtung nach Anspruch 2, **dadurch gekennzeichnet, dass** das Halteelement (50) für den Sensor (40) aus einem Ring (51) besteht, von dem aus sich vier Arme (52) erstrecken, und gegenüber den Armen (52) aus einer koaxialen, hohlen und ringförmigen Erhöhung (53).

7. Vorrichtung nach Anspruch 6, **dadurch gekennzeichnet, dass** die ringförmige Erhöhung (53) Öffnungen (53a) aufweist, durch die Luft zu dem Sensor gelangen kann.

8. Vorrichtung nach Anspruch 2, **dadurch gekennzeichnet, dass** das Halteelement (150) für den Sensor (140) aus einem Ring (151) besteht, von dem aus sich vier axiale Arme (152) erstrecken, die in radialer Richtung elastisch deformierbar sind und an ihren freien Enden mit einem nach innen gerichteten Vorsprung (152a) versehen sind, der zum Eingriff in einen der Unterschnitte (32b) des Stützelements (30) dient.

9. Vorrichtung nach Anspruch 8, **dadurch gekennzeichnet, dass** das Halteelement (150) für den Sensor (140) einen äußeren Durchmesser hat, der dem inneren Durchmesser des Knopfs (70) entspricht.

10. Vorrichtung nach Anspruch 1, **dadurch gekennzeichnet, dass** der Knopf ringförmige Nasen (73) für den Eingriff in den Zahn (32c) des Sensor-Trageelements (30) aufweist.

11. Thermostat-Ventil, enthaltend einen Steuerknopf, **gekennzeichnet dadurch, dass** es mit einer Vorrichtung für die Auswahl der Betriebsweise nach Anspruch 1 versehen ist.

## Revendications

1. Dispositif pour sélectionner le mode de fonctionnement de têtes de réglage, en particulier pour des robinets thermostatiques, comprenant :
- un corps (10) doté de moyens (12, 12a) pour être fixé au robinet et d'une première dent (16) s'avançant radialement sous la forme d'un "L" retourné et s'étendant dans la direction axiale sur une longueur prédéterminée, ledit corps comportant une bride fixe (13), dont une partie s'étend radialement vers l'extérieur et possède un pointeur de référence (14) s'étendant axialement dans la direction opposée à celle de la fixation au dispositif de chauffage, sur ladite bride est présente une dent (15) s'étendant axialement dans la direction opposée à celle de la retenue au dispositif de chauffage, ledit corps (10) comportant également des moyens (11a) pour s'engager avec :
- un élément de support (30) qui peut être associé dans la direction axiale avec
- un élément de support de capteur (50, 150) destiné à un capteur sensible à la température (40, 140),
- des moyens de sécurité, coaxiaux, élastiques (60, 160) interposés entre ledit élément de support (50, 150) et un bouton rotatif (70),
- le bouton rotatif (70) servant à sélectionner la température souhaitée par l'utilisateur,
ledit bouton comportant dans sa partie inférieure deux parties internes en saillie (72a, 72b), qui sont espacées angulairement l'une par rapport à l'autre de façon appropriée, et une échelle extérieure graduée (74),
- une bague (20) montée axialement sur le corps (10) et mobile à la fois dans la direction axiale et en rotation pour une sélection du mode de fonctionnement du robinet,
**caractérisé en ce que** :
- ladite seconde dent (15) de la bride (13) est disposée suivant une position angulaire de façon à être alignée axialement avec la première dent (16) du corps (10) et disposée à l'opposé de ladite première dent (15);
- une échelle graduée (25) se trouve sur la surface externe de la bague (20) ;
- ladite bague (20) possède une partie interne en saillie (23) s'étendant sur toute la longueur axiale de ladite bague (20);
de même qu'une surface frontale (22) dotée d'embases (22a) pouvant s'engager alternativement avec ladite seconde dent (15) de la bride (13) ou avec la première dent (16) du corps (10) et avec au moins l'une desdites parties internes en saillie (72a, 72b) du bouton (70),
- ledit corps (10) comporte des rainures annulaires coaxiales (11 b, 11 c) qui coopèrent avec des moyens élastiques (24) de ladite bague (20) pour un engagement dans la direction radiale en vue de retenir la bague (20) de façon à la bloquer dans une position axiale différente du corps (10) en vue de déterminer les différents fonctionnements du dispositif.

2. Dispositif selon la revendication **1, caractérisé en ce que** l'élément (30) supportant le support de capteur (50, 150) est constitué d'un corps cylindrique (31) qui présente un filet (31 a) approprié pour s'adapter avec le filet intérieur (11a) du corps (10) pour les retenir l'un par rapport à l'autre dans la direction axiale et une pièce plate circulaire (32) dotée d'embases (32a) disposées suivant des intervalles angulaires appropriés pour un engagement avec ledit support de capteur (50, 150).

3. Dispositif selon la revendication 2, **caractérisé en ce que** lesdites embases (32a) présentent une découpe (32b).

4. Dispositif selon la revendication 2, **caractérisé en ce que** ladite pièce plate (32) possède des pattes radiales à indentation (32c) appropriées pour s'engager avec le bouton (70).

5. Dispositif selon la revendication 2, **caractérisé en ce que** ladite pièce plate (32) possède des pattes radiales supplémentaires (32d) capables de former un arrêt de fin de course pour le déplacement dans la direction axiale vers le robinet du bouton (70).

6. Dispositif selon la revendication 2, **caractérisé en ce que** ledit élément de support (50) destiné au capteur (40) est constitué d'une bague (51) à partir de laquelle s'étendent quatre bras (52) et, sur le côté opposé aux bras (52), une partie annulaire en relief, creuse et coaxiale (53).

7. Dispositif selon la revendication 6, **caractérisé en ce que** la partie annulaire en relief (53) possède des ouvertures (53a) pour permettre à l'air de passer vers le capteur.

8. Dispositif selon la revendication 2, **caractérisé en ce que** ledit élément de support (150) destiné au capteur (140) est constitué d'une bague (151) à partir de laquelle s'étendent quatre bras axiaux (152) qui peuvent se déformer élastiquement dans la direction radiale et pourvus au niveau de leurs extrémités libres d'une griffe dirigée vers l'intérieur (152a) en vue d'un engagement avec l'une des découpes (32b) de l'élément de support (30).

9. Dispositif selon la revendication 8, **caractérisé en ce que** ledit élément de support (150) destiné au capteur (140) présente un diamètre extérieur correspondant au diamètre intérieur du bouton (70).

10. Dispositif selon la revendication 1, **caractérisé en ce que** ledit bouton possède des embases annuaire (73) pour un engagement avec lesdites dents (32c) de l'élément de support de capteur (30).

11. Robinet thermostatique comportant une tête de réglage **caractérisé par le fait qu'**il est doté d'un dispositif pour sélectionner le mode de fonctionnement selon la revendication 1.
